Europäisches Patentamt

European Patent Office  (11) Veröffentlichungsnummer : **0 067 891**

Office européen des brevets  **B1**

(12)  **EUROPÄISCHE PATENTSCHRIFT**

(45) Veröffentlichungstag der Patentschrift :
09.10.85

(51) Int. Cl.⁴ : **H 02 P   7/06**

(21) Anmeldenummer : **81104358.7**

(22) Anmeldetag : **05.06.81**

(54) Drehzahlkonstantregeleinrichtung eines Gleichstromnebenschlussmotors bei Netzspannungsschwankungen.

(43) Veröffentlichungstag der Anmeldung :
**29.12.82 Patentblatt 82/52**

(45) Bekanntmachung des Hinweises auf die Patenterteilung : **09.10.85 Patentblatt 85/41**

(84) Benannte Vertragsstaaten :
**AT BE CH DE FR IT LI LU NL**

(56) Entgegenhaltungen :
**DE-A- 2 318 672**
**DE-B- 1 118 248**
**DE-C-   904 560**
**GB-A-   838 108**
**US-A- 2 721 299**
**US-A- 3 183 427**

(73) Patentinhaber : **Fried. Krupp Gesellschaft mit beschränkter Haftung**
**Altendorfer Strasse 103**
**D-4300 Essen 1 (DE)**

(72) Erfinder : **Seeger, Herbert**
**Langeoogweg 1**
**D-4300 Essen 1 (DE)**

## Beschreibung

Die Erfindung bezieht sich auf eine Einrichtung zur Drehzahlkonstanthaltung eines aus einem Spannungsschwankungen aufweisenden Gleichspannungsnetz gespeisten Gleichstromnebenschlußmotors, dessen Erregerstrom abhängig von der Höhe der Netzspannung oder der Ankerspannung des Gleichstromnebenschlußmotors durch einen der Feldwicklung des Gleichstromnebenschlußmotors vorgeschalteten nichtlinearen Widerstand in der Weise gesteuert wird, daß die Drehzahl auch im Sättigungsbereich des Eisenkerns des Gleichstromnebenschlußmotors konstant bleibt. Eine Einrichtung dieser Art ist durch die DE-C-904 560 beschrieben. Es ist weiterhin aus der US-A-3 183 427 bekannt, einen derartigen nichtlinearen Widerstand durch parallelgeschaltete Zenerdioden zu realisieren.

Schließlich ist es bekannt, zur Drehzahlkonstanthaltung von Gleichstromnebenschlußmotoren einen Drehzahlistmeßwertgeber mit dem Gleichstromnebenschlußmotor zu koppeln und der Netzerregerspannung einen weiteren zusätzlichen Erregerspannungsteil mittels eines Stellgliedes des Reglers zu überlagern. Bei einer solchen Regeleinrichtung ist der Aufwand an elektronischen Bauteilen beträchtlich und der Regler ist kompliziert aufgebaut. Außerdem ist eine Zusatzspannungsquelle erforderlich.

Die Erfindung, wie sie in dem Anspruch gekennzeichnet ist, löst die Aufgabe, eine Drehzahlkonstanthaltung für einen Gleichstromnebenschlußmotor, dessen Drehzahl bei Netzspannungsschwankungen auf einen konstanten Wert einregelt, zu schaffen, die mit einer sehr einfachen Parallelschaltung eines Widerstandes und einer Zenerdiode arbeitet, die, in Reihe mit einer weiteren Zenerdiode angeordnet, der Feldwicklung des Gleichstrommotors vorgeschaltet sind.

Die durch die Erfindung erreichten Vorteile sind im wesentlichen darin zu sehen, daß nur wenige Bauelemente (Widerstand, Zenerdioden) zur Drehzahlkonstanthaltung des Gleichstromnebenschlußmotors benötigt werden und daß die Drehzahl des Gleichstromnebenschlußmotors auch bei großer und plötzlicher Netzspannungsschwankung und trotz Ankerstrombegrenzung schnell wieder auf den bestimmten Wert eingeregelt wird.

Ein Ausführungsbeispiel der Erfindung ist in der Zeichnung dargestellt. Es zeigt :

Figur 1  ein Schaltbild einer Einrichtung zur Drehzahlkonstanthaltung eines Gleichstromnebenschlußmotors bei langsamen und schnellen Netzspannungsschwankungen,

Figur 2  eine Magnetisierungskurve des Eisens des Gleichstromnebenschlußmotors,

Figur 3  das Drehzahlverhalten des Gleichstromnebenschlußmotors bei unterschiedlicher Belastung,

Figur 4  einen Ausschnitt auf Fig. 1,

Figur 5  einen Ausschnitt aus Fig. 1, wobei der Anker des Gleichstrommotors für sein dynamisches Verhalten dargestellt ist,

Figuren 6 bis 8  jeweils eine Regeleinrichtung zur Drehzahlkonstanthaltung des Gleichstromnebenschlußmotors bei langsamen Netzspannungsschwankungen mit den zugehörigen Werten der Erregerströme des Gleichstromnebenschlußmotors und den Netzspannungs- sowie Erregerstromverhältnissen bei unterschiedlicher Wahl des Widerstands des Erregerwicklungsvorwiderstandes und der Zenerspannung der dazu parallel geschalteten Zenerdiode,

Figur 9  das Netzspannungs- und Erregerstromverhalten graphisch dargestellt gemäß Fig. 6 bis 8,

Figuren 10 bis 13  jeweils eine Regeleinrichtung zur Drehzahlkonstanthaltung des Gleichstromnebenschlußmotors bei schnellen Netzspannungsschwankungen.

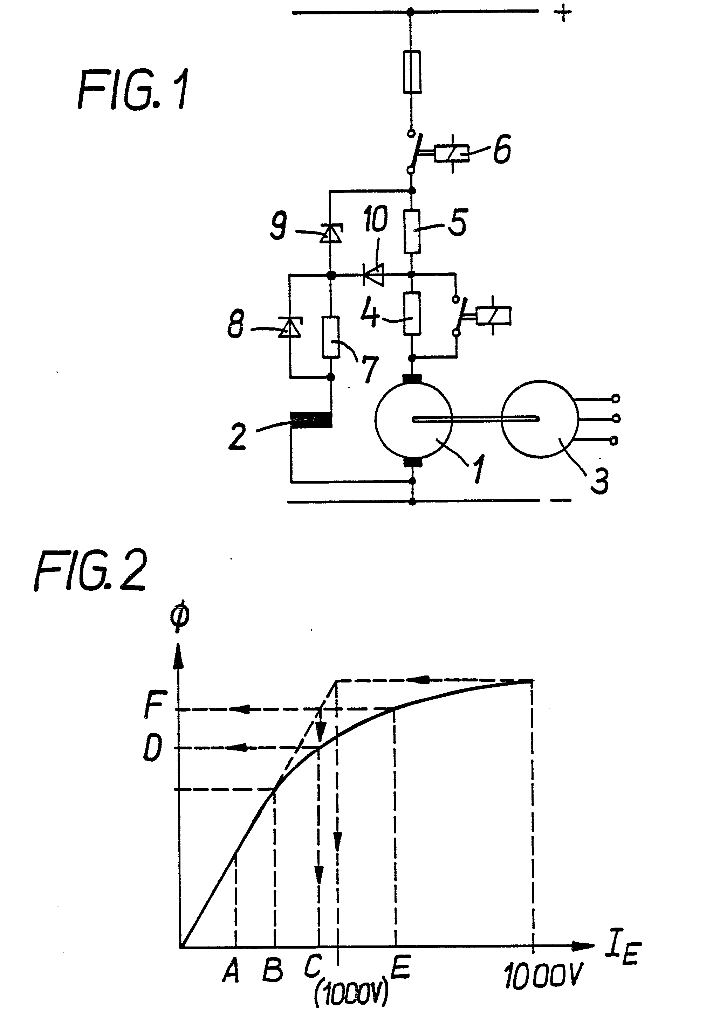

Der in Fig. 1 der Zeichnung dargestellte Gleichstromnebenschlußmotor weist einen Anker 1 und eine Feldwicklung 2 auf. An dem Anker 1 des Gleichstromnebenschlußmotors ist ein Generator 3 mechanisch angekoppelt. Dem Anker 1 des Gleichstromnebenschlußmotors sind ein Anlaufwiderstand 4, ein Dämpfungswiderstand 5 und der Schließkontakt eines Einschaltschützes 6 vorgeschaltet. Parallel zu dem Anlaufwiderstand 4 ist ein Schließkontakt eines Anlaufwiderstandsüberbrückungsschützes geschaltet. Der Feldwicklung 2 des Gleichstromnebenschlußmotors sind in Parallelschaltung ein Widerstand 7 und eine Zenerdiode 8 vorgeschaltet. Diesem Widerstand 7 und der Zenerdiode 8 sind in Parallelschaltung eine Z-Diode 9 sowie zueinander in Reihe eine Sperrdiode 10 und der Dämpfungswiderstand 5 vorgeschaltet.

In Fig. 2 ist anhand der Magnetisierungskurve erläutert, wie der Erregerstrom durch die Drehzahlkonstantregeleinrichtung auch im Sättigungsbereich des Eisens so gesteuert wird, daß sich ein magnetischer Fluß einstellt, der proportional zur Höhe der anliegenden Netzspannung ist. An der Abzisse des Koordinatensystems gemäß Fig. 2 ist der Erregerstrom und an der Ordinate ist der magnetische Fluß eingetragen. Erhöht sich die Netzspannung von ihrem minimalen Wert auf einen bestimmten höheren Wert, so erhöht sich auch die Erregerspannung und der Erregerstrom proportional zu der Netzspannung. Dieses ist in Fig. 2 durch A und B auf der Abzisse dargestellt. In Fig. 2 ist ersichtlich, daß die Magnetisierungskennlinie sich im linearen Bereich befindet. Dadurch verändert sich der magnetische Fluß auch proportional zur Höhe der Netzspannung. Geht man davon aus, daß der Ankerwiderstand des Ankers 1 des Gleichstromnebenschlußmotors sehr klein ist, so wird die Leerlaufdrehzahl des Gleichstromnebenschlußmotors bei Spannungsänderung (zwischen A und B) konstant bleiben. Würde nun die Netzspannung weiter steigen, so würde, wenn die Regeleinrichtung (die weiter unten erläutert wird) nicht vorhanden wäre, sich ein magnetischer Fluß einstellen, der nicht mehr proportional zur Netzspannung wäre. Dieses ist in Fig. 2 durch C auf der Abzisse dargestellt. In Fig. 2 ist ersichtlich, daß sich die Magnetisierungskennlinie nicht mehr im linearen Bereich befindet. Dieses würde zur Folge haben, daß der magnetische Fluß (D) nicht mehr proportional zur Netzspannung wäre, sondern kleiner. Dadurch würde sich die Drehzahl erhöhen. Da die Drehzahl konstant bleiben soll, muß der Erregerstrom bzw. Erregerspannung erhöht werden, und zwar so, daß der magnetische Fluß proportional zur Höhe der Netzspannung verändert wird. Dieses ist in Fig. 2 durch E auf der Abzisse dargestellt. Dieser Erregerstrom (E) bewirkt, daß sich ein magnetischer Fluß (F) einstellt, als befinde sich das Eisen nicht in seinem Sättigungsbereich. Steigt die Netzspannung noch weiter an, so muß die Erregerspannung noch mehr zusätzlich erhöht werden.

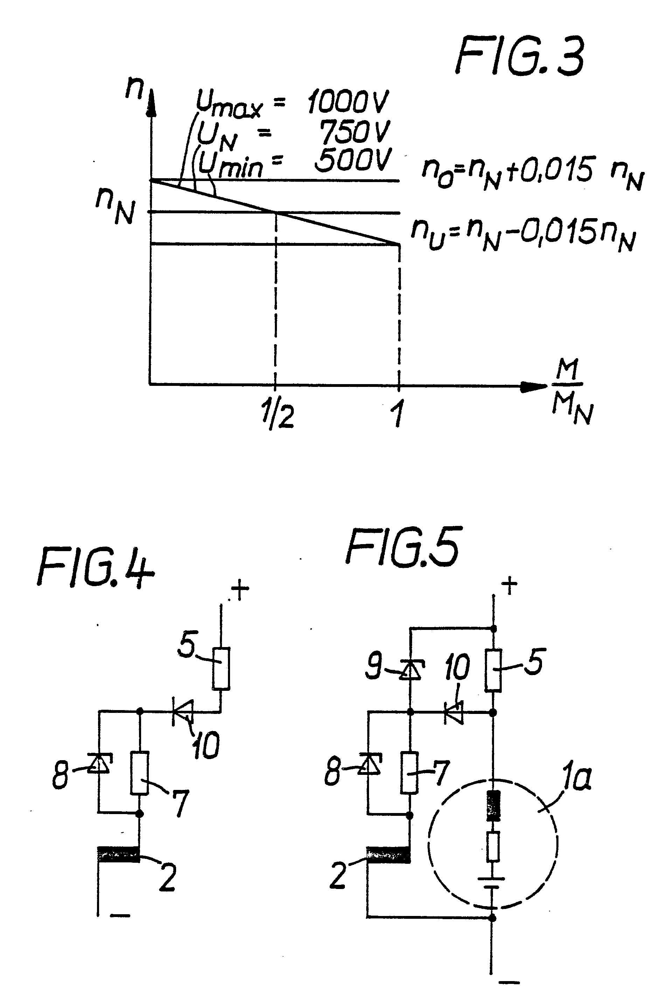

In Fig. 3 ist dargestellt, welche Drehzahl sich einstellt, wenn der Gleichstromnebenschlußmotor unterschiedlich belastet wird und die Höhe der Netzspannung unterschiedlich ist. Der Motor ist so konstruiert, daß nur kleine Drehzahlabweichungen von der Nenndrehzahl möglich sind und zwar ± 1,5 % von der Nenndrehzahl zwischen Leerlauf von Vollast.

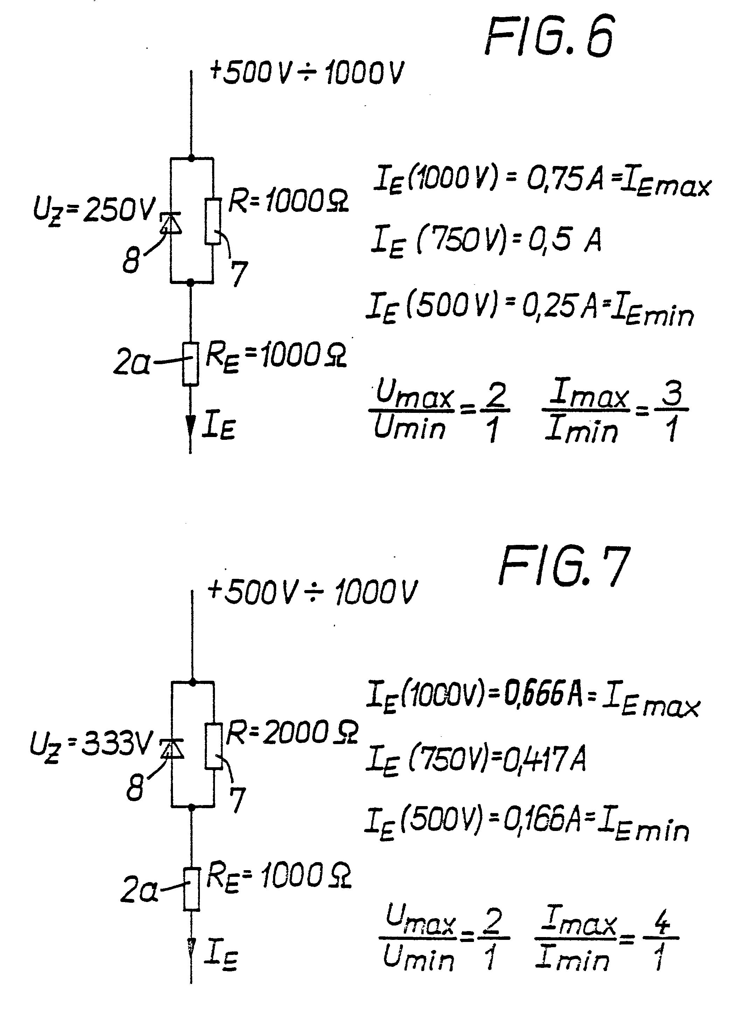

In Fig. 4 ist die Regeleinrichtung dargestellt, durch die die Drehzahl des Gleichstromnebenschlußmotors auch im Sättigungsbereich des Eisenkerns des Gleichstromnebenschlußmotors konstant bleibt (hohe Netzspannung). Damit die Drehzahl konstant bleibt, muß der Gleichstromwiderstand 2a der Feldwicklung 2 des Gleichstromnebenmotors, die Zenerspannung der Zenerdiode 8 und der Widerstandswert des Widerstandes 7 zueinander in bestimmten Verhältnissen liegen, damit die Magnetisierungskurve ($I_{Ei}$ Ø) und die Netzspannungs-Erregerstromkurve entsprechend übereinstimmen, wodurch der magnetische Fluß proportional zur Netzspannung ist. Dieses ist anhand von Zahlenwerten in Fig. 6 bis Fig. 8 erläutert.

In Fig. 6 beträgt der Gleichstromwiderstand 2a der Feldwicklung 2 1 000 Ω. Der Widerstandswert des Widerstands beträgt auch 1 000 Ω. Die Zenerspannung der Zenerdiode 8 beträgt 250 V. Liegt eine Spannung von 1 000 V an, so stellt sich ein Erregerstrom von 0,75 A ein. Liegt eine Spannung von 500 V an, so stellt sich ein Erregerstrom von 0,25 A ein. Hierbei kann man erkennen, daß der Erregerstrom bei Halbierung der Netzspannung auf ein Drittel absinkt ; bzw. Spannungsverdopplung bewirkt Verdreifachung des Erregerstromes.

In Fig. 7 beträgt der Gleichstromwiderstand 2a der Feldwicklung 2 wiederum 1 000 Ω. Der Widerstandswert des Widerstandes beträgt nun aber 2 000 Ω. Die Zenerspannung der Zenerdiode 8 beträgt nun 333 V. Liegt eine Spannung von 1 000 V an, so stellt sich ein Erregerstrom von 0,666 6 A ein. Liegt eine Spannung von 500 V an, so stellt sich ein Erregerstrom von 0,166 6 A ein. Hierbei kann man erkennen, daß sich der Erregerstrom bei Verdopplung der Spannung vervierfacht.

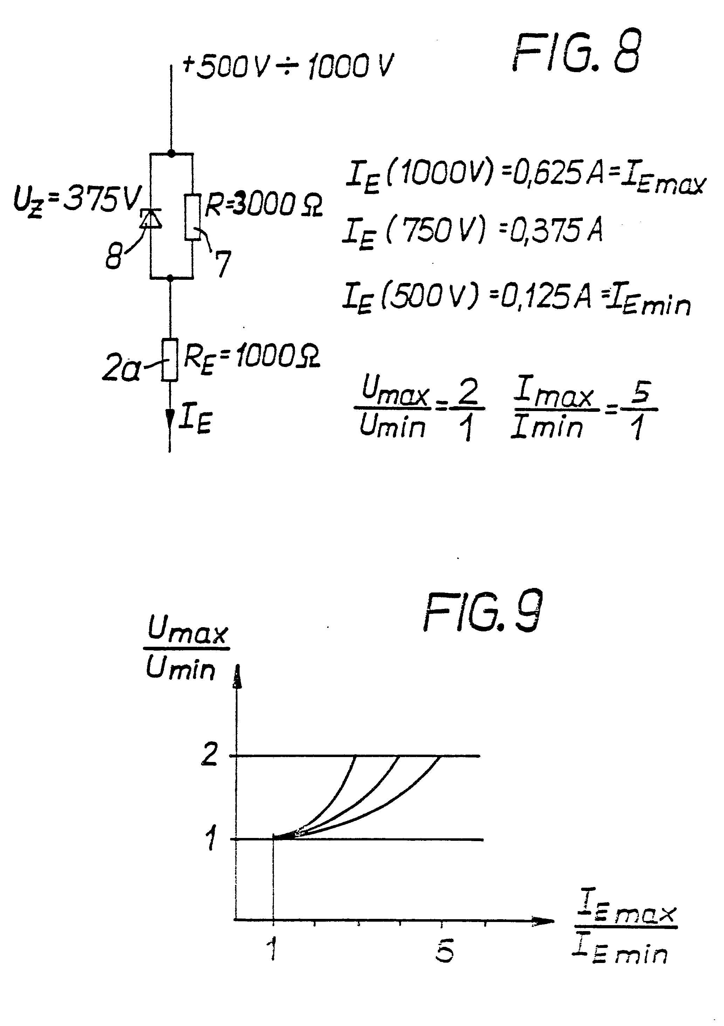

In Fig. 8 beträgt der Gleichstromwiderstand 2a der Feldwicklung 2 auch wieder 1 000 Ω. Der Widerstandswert des Widerstandes 7 beträgt nun 3 000 Ω, und die Zenerspannung der Zenerdiode 8 beträgt 375 V. Bei einer Verdopplung der Höhe der Spannung wird der Erregerstrom verfünffacht.

Die in Fig. 6 bis 8 gefundenen Werte und zusätzliche Zwischenwerte wurden in Fig. 9 in einem Koordinatensystem eingezeichnet. An der Ordinate wurde das Verhältnis maximale Spannung zu minimaler Spannung und an der Abzisse das Verhältnis maximaler Erregerstrom zu minimalen Erregerstrom aufgetragen. Ein Spannungsanstieg hat einen überproportionalen Erregerstromanstieg zur Folge. In Fig. 9 sind drei Kurven eingetragen, wobei die Kurve mit der größten Steigung etwa einen entsprechend ähnlichen Verlauf wie der Sättigungskurvenverlauf der Magnetisierungskurve gemäß Fig. 2 hat. Es ist also möglich, für jede Magnetisierungskennlinie einen bestimmten Widerstand 7 und eine bestimmte Zenerdiode so einzusetzen, daß sich ein magnetischer Fluß einstellt, der proportional zur Netzspannung ist.

In Fig. 5 ist eine Regeleinrichtung dargestellt, durch die die Drehzahl des Gleichstrommotors bei schnellem Spannungsanstieg — unter Berücksichtigung, daß der Ankerstrom einen bestimmten Wert nicht überschreiten darf — schnellstens wieder auf einen konstanten Wert eingeregelt wird. Damit der Ankerstrom nicht zu groß werden kann, ist der Dämpfungswiderstand 5 dem Anker 1 vorgeschaltet.

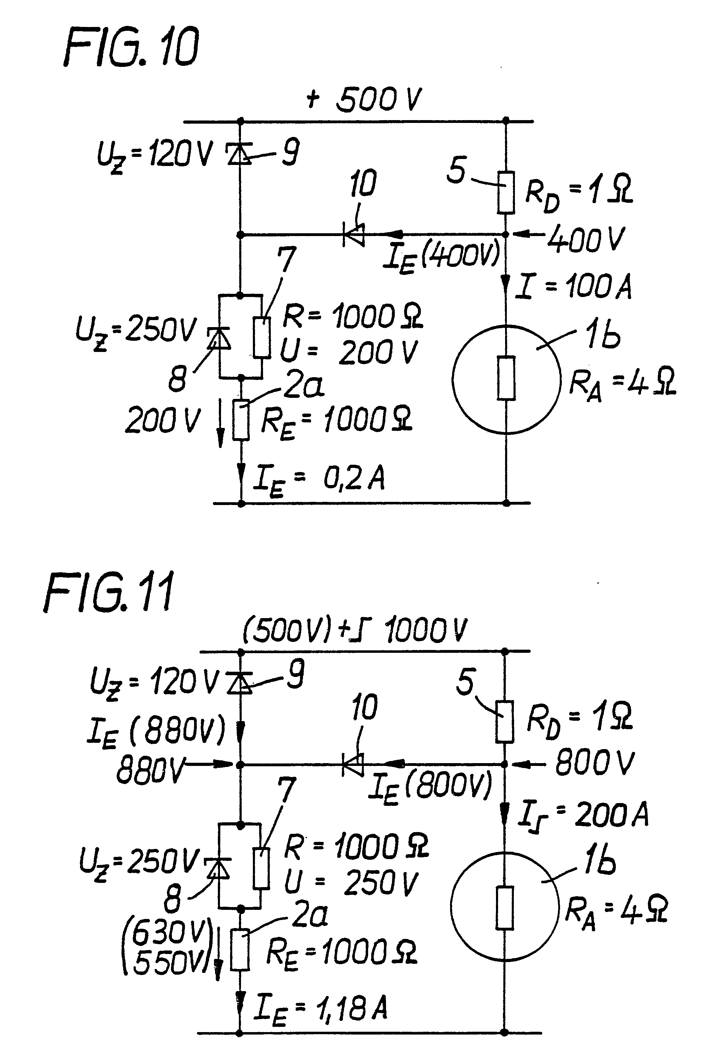

Da das Erregerfeld 2 über den Dämpfungswiderstand 5 gespeist wird, würde der Erregerstrom auch gedämpft werden und das Nennmoment würde kleiner werden, wodurch der Gleichstromnebenschlußmotor bei Vollast seine Drehzahl verlangsamen würde und stehen bleiben würde. Um dieses zu verhindern, wird die Feldwicklung mit einer zusätzlichen Erregerspannung beaufschlagt. Dieses erfolgt durch die Z-Diode 9. Damit diese Z-Diode 9 vom Anker 1 entkoppelt ist, ist die Sperrdiode 10 eingesetzt. Durch die kurzzeitige Beaufschlagung der Erregerspannung wird auch der Ankerstrom zusätzlich gedämpft. Die Regelung des Gleichstrommotors bei schnellen Spannungsänderungen ist in Fig. 10 bis 13 anhand von Zahlenwerten erläutert.

Gemäß Fig. 10 weist das elektrische Netz eine Spannung in Höhe von 500 V auf (minimaler Wert). Der Dämpfungswiderstand 5 weist einen Widerstandswert von 1 Ω auf. Der Ankergleichstromwiderstand $R_A$ des Ankers 1b beträgt 4 Ω. Hierbei wird die Ankerinduktivität nicht berücksichtigt und die Ankergegenspannung wird durch Veränderung des Ohmwertes des Ankergleichstromwiderstandes 1b berücksichtigt. Die Ankerspannung beträgt 400 V gemäß Fig. 10. Die Zenerspannung der Z-Diode 9 beträgt 120 V. Da die Ankerspannung (400 V) größer ist als die Netzspannung minus Zenerspannung der Z-Diode 9 (500 V − 120 V = 380 V) fällt an der Z-diode 9 eine Spannung (100 V) ab, die kleiner ist als die Zenerspannung der Z-Diode 9, so daß sich die Z-Diode 9 im Sperrbereich befindet und über sie kein Beitrag für die Feldwicklung 2 geliefert wird. Der Erregerstrom fließt also vom Pluspol des elektrischen Netzes über den Dämpfungswiderstand 5, die Sperrdiode 10, den Widerstand 7 und über den Gleichstromwiderstand 2a zum Minuspol des elektrischen Netzes. Am Widerstand 7 fällt gemäß Fig. 10 eine Spannung von 200 V ab. Da die Zenerspannung der Zenerdiode 8 eine Sperrspannung von 250 V aufweist, wird über diese Zenerdiode 8 kein Beitrag für die Feldwicklung 2 geliefert. An dem Gleichstromwiderstand 2a der Feldwicklung 2 fällt eine Spannung von 200 V ab. Dadurch fließt ein Erregerstrom von 0,2 A durch die Feldwicklung.

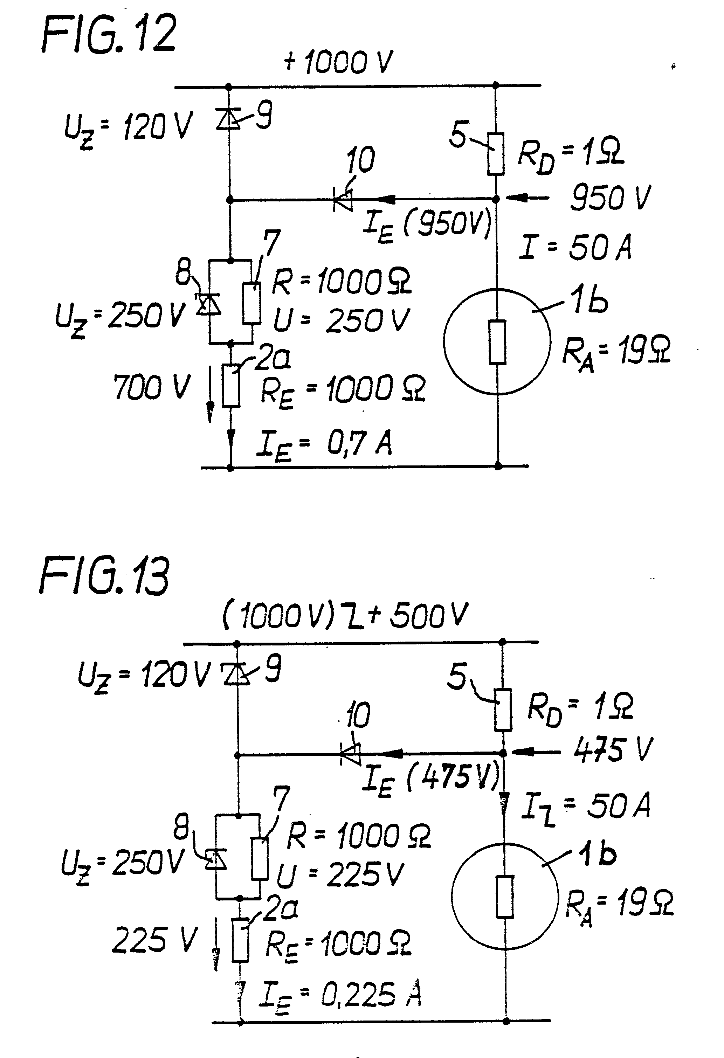

Erhöht sich nun die Netzspannung plötzlich von 500 V auf 1 000 V, so verändern sich die Spannungs- und die Stromverhältnisse des Gleichstromnebenschlußmotors. Dieses ist in Fig. 11 und 12 dargestellt.

Gemäß Fig. 11 wird angenommen, daß die Ankerinduktivität Null sei. Das bedeutet, daß der Ankergleichstromwiderstand 1b beim Spannungssprung seinen Wert nicht ändert. Dieses hat zur Folge, daß sich zunächst ein Ankerstrom einstellt, der einen Wert von 200 A beträgt. Dadurch stellt sich eine Ankerspannung ein, die einen Wert von 800 V aufweist. Durch diese Spannung würde sich ein Erregerstrom einstellen, dessen Wert 0,55 A betragen würde. Da dieser Wert kleiner ist als der Wert des Erregerstromes bei Anliegen von 1 000 V (0,7 A ; siehe Fig. 12), würde durch diese Feldschwächung das abzugebende Nennmoment des Gleichstrommotors herabgesetzt werden. Der Gleichstromnebenschlußmotor würde dann bei Vollastbetrieb seine Drehzahl immer weiter verringern und stehen bleiben. Damit dies nicht geschieht, wird über die Z-Diode 9 die Feldwicklung 2 mit einem zusätzlichen Erregerstrom versorgt. Gemäß Fig. 11 weiste die Zenerspannung der Z-Diode 9 einen Wert von 120 V auf. Da die Ankerspannung einen Wert von 800 V aufweist und hinter der Z-Diode 9 eine Spannung von 880 V (1 000 V ,− 120 V) anliegt, geht die Z-Diode 9 in den Leitzustand über. Da an der Z-Diode 9 eine Spannung von 120 V und an der Zenerdiode 8 eine Spannung von 250 V abfallen, fällt an der Feldwicklung 2 eine Spannung von 630 V ab. Dadurch fließt ein zusätzlicher Erregerstrom von 0,63 A. Da sich die beiden Teilerregerströme überlagern, fließt ein Gesamterregerstrom von 1,18 A durch die Feldwicklung 2. Dieser hohe Erregerstrom bewirkt, daß der Ankerstrom zusätzlich gedämpft wird und der Gleichstromnebenschlußmotor sein maximales Nennmoment abgeben kann. Nach einer kurzen Ausgleichzeit stellt sich die Nenndrehzahl wieder ein und die Spannungs- und Stromverhältnisse des Gleichstromnebenschlußmotors stabilisieren sich. Dies ist in Fig. 12 dargestellt. Gemäß Fig. 12 weist der Ankergleichstromwiderstand nun einen Wert von 19 Ω auf. Dadurch stellt sich eine Ankerspannung von 950 V ein. Die Z-Diode 9 befindet sich wieder in ihrem Sperrbereich (1 000 V − 120 V = 880 V < 950 V). Der Erregerstrom weist einen Wert von 0,7 A auf.

In Fig. 13 ist dargestellt, wie sich die Strom- und Spannungsverhältnisse des Gleichstromnebenschlußmotors ändern würden, wenn die Netzspannung von 1 000 V (maximale Spannung) auf 500 V (minimale Spannung) ändern würde. Da der Ankergleichstromwiderstand 1b kurzzeitig den Wert von 19 Ω beibehält, fällt eine Ankerspannung von 475 V an. Durch diesen Wert der Ankerspannung fließt ein Erregerstrom von 0,225 A durch die Feldwicklung 2. Dadurch wird in diesem Fall auch die Drehzahl des Gleichstromnebenschlußmotors kaum erhöht, da im statischen Fall gemäß Fig. 10 die Ankerspannung 400 V und der Erregerstrom 0,2 A beträgt. Die Strom- und Spannungsverhältnisse (475 V : 0,225 A und 400 V : 0,2 A) sind nahezu gleich.

Die Zahlenwerte in Fig. 6 bis 13 sind so gewählt worden, daß die Regelvorgänge möglichst einfach dargestellt werden konnten. Die Induktivität der Feldwicklung 2 ist aus anschaulichen Gründen nicht berücksichtigt worden.

**Patentanspruch**

Einrichtung zur Drehzahlkonstanthaltung eines aus einem Spannungsschwankungen aufweisenden Gleichspannungsnetz gespeisten Gleichstromnebenschlußmotors, dessen Erregerstrom abhängig von der Höhe der Netzspannung oder der Ankerspannung des Gleichstromnebenschlußmotors durch einen der Feldwicklung des Gleichstromnebenschlußmotors vorgeschalteten nichtlinearen Widerstand in der Weise gesteuert wird, daß die Drehzahl des Gleichstromnebenschlußmotors auch im Sättigungsbereich des Eisenkerns des Gleichstromnebenschlußmotors konstant bleibt, dadurch gekennzeichnet, daß der nichtlineare Widerstand gebildet wird durch eine Parallelschaltung eines Widerstandes (7) und einer Zenerdiode (8), daß dem Anker (1) des Gleichstromnebenschlußmotors ein Dämpfungswiderstand (5) vorgeschaltet ist und daß der Feldwicklung-Widerstand-Zenerdiode-Gruppe eine weitere Zenerdiode (9) (Z-Diode) vorgeschaltet ist, wobei diese Z-Diode (9) mit der Feldwicklung-Widerstand-Zenerdiode-Gruppe eine Reihenschaltung und der Dämpfungswiderstand (5) mit einer Sperrdiode (10) und der Erreger-Widerstand-Zenerdiode-Gruppe eine Reihenschaltung bilden sowie die Z-Diode (9) parallel zu dem zueinander in Reihe liegenden Dämpfungswiderstand (5) und der Sperrdiode (10) geschaltet ist, wodurch die Drehzahl des Gleichstromnebenschlußmotors auch bei hohen und schnellen Netzspannungsschwankungen (dynamisch) nahezu konstant bleibt.

**Claim**

Arrangement for keeping constant the rotation rate of a direct-current shunt-wound motor fed from a direct-current mains having voltage fluctuations, the exciting current of which motor is controlled in dependence upon the level of the mains voltage or the armature voltage of the direct-current shunt-wound motor by a non-linear resistor connected in series before the field winding of the direct-current shunt-wound motor, in such manner that the rotation rate of the direct-current shunt-wound motor remains constant even in the range of saturation of the iron core of the direct-current shunt-wound motor, characterised in that the non-linear resistor is formed by a parallel connection of a resistor (7) and a Zener diode (8), in that a damping resistor (5) is connected in series before the armature (1) of the direct-current shunt-wound motor and in that a further Zener diode (9) (Z-diode) is connected in series before the field winding — resistor — Zener diode group, this Z-diode (9) forming a series connection with the field winding — resistor — Zener diode group and the damping resistor (5) forming a series connection with a blocking diode (10) and the exciter — resistor — Zener diode group, while the Z-diode (9) is connected in parallel with the damping resistor (5) and the blocking diode (10), which are in series with one another, whereby the rotation rate of the direct-current shunt-wound motor remains (dynamically) nearly constant even in the case of high and rapid mains voltage fluctuations.

**Revendication**

Dispositif permettant de stabiliser la vitesse de rotation d'un moteur shunt à courant continu qui est alimenté par un secteur à tension constante présentant des variations de tension et dont le courant d'excitation est commandé, en fonction de la valeur de la tension du secteur ou de la tension d'induit du moteur shunt à courant continu, par une résistance non linéaire montée en avant de l'enroulement de champ du moteur shunt à courant continu, de telle manière que la vitesse de rotation reste constante même dans le domaine de saturation du noyau en fer du moteur shunt à courant continu, caractérisé en ce que la résistance non linéaire est constituée par un montage en parallèle d'une résistance (7) et d'une diode Zener (8), en ce qu'en avant de l'induit (1) du moteur shunt à courant continu le dispositif comporte une résistance d'amortissement (5) et en ce qu'avant le groupe constitué par l'enroulement de champ, la résistance et la diode Zener le dispositif comporte une autre diode Zener (9) (Diode Z), cette diode Z(9) étant montée en série avec le groupe constitué par l'enroulement de champ, la résistance et la diode Zener et la résistance d'amortissement (5) étant montée en série avec une diode d'arrêt (10) et le groupe constitué par l'excitateur, la résistance et la diode Zener et la diode Z(9) étant montée en parallèle avec la résistance d'amortissement (5) et la diode d'arrêt (10) montés en série l'une avec l'autre de sorte que la vitesse de rotation du moteur shunt à courant continu reste pratiquement constante même en cas de fortes et rapides variations de tension (dynamiques).

*FIG. 1*

*FIG. 2*

FIG.3

$$U_{max} = 1000\,V$$
$$U_N = 750\,V$$
$$U_{min} = 500\,V$$

$$n_o = n_N + 0,015\,n_N$$
$$n_U = n_N - 0,015\,n_N$$

FIG.4

FIG.5

## FIG.6

$+500\,V \div 1000\,V$

$U_Z = 250\,V$    $R = 1000\,\Omega$

8    7

$2a$   $R_E = 1000\,\Omega$

$I_E$

$I_E(1000\,V) = 0{,}75\,A = I_{E\,max}$

$I_E(750\,V) = 0{,}5\,A$

$I_E(500\,V) = 0{,}25\,A = I_{E\,min}$

$$\frac{U_{max}}{U_{min}} = \frac{2}{1} \qquad \frac{I_{max}}{I_{min}} = \frac{3}{1}$$

## FIG.7

$+500\,V \div 1000\,V$

$U_Z = 333\,V$    $R = 2000\,\Omega$

8    7

$2a$   $R_E = 1000\,\Omega$

$I_E$

$I_E(1000\,V) = 0{,}666\,A = I_{E\,max}$

$I_E(750\,V) = 0{,}417\,A$

$I_E(500\,V) = 0{,}166\,A = I_{E\,min}$

$$\frac{U_{max}}{U_{min}} = \frac{2}{1} \qquad \frac{I_{max}}{I_{min}} = \frac{4}{1}$$

## FIG. 8

$+500V \div 1000V$

$U_Z = 375V$

$R = 3000 \, \Omega$

8    7

$2a$   $R_E = 1000 \, \Omega$

$I_E$

$I_E (1000V) = 0{,}625\,A = I_{E\,max}$

$I_E (750\,V) = 0{,}375\,A$

$I_E (500\,V) = 0{,}125\,A = I_{E\,min}$

$\dfrac{U_{max}}{U_{min}} = \dfrac{2}{1}$    $\dfrac{I_{max}}{I_{min}} = \dfrac{5}{1}$

## FIG. 9

4

## FIG. 10

$+$ 500 V

$U_Z = 120\,V$ — 9

10

5 $R_D = 1\,\Omega$

$I_E(400V)$ ← 400 V

7

$I = 100\,A$

$U_Z = 250\,V$

$R = 1000\,\Omega$
$U = 200\,V$

1b

8

2a

$R_A = 4\,\Omega$

200 V $\downarrow$ $R_E = 1000\,\Omega$

$I_E = 0,2\,A$

## FIG. 11

$(500V) + $ 1000 V

$U_Z = 120\,V$ — 9

$I_E(880V)$

10

5 $R_D = 1\,\Omega$

880 V → ← 800 V

$I_E(800V)$

7

$I_\Gamma = 200\,A$

$U_Z = 250\,V$

$R = 1000\,\Omega$
$U = 250\,V$

1b

8

2a

$R_A = 4\,\Omega$

$(630V)$
$(550V)$ $R_E = 1000\,\Omega$

$I_E = 1,18\,A$

# FIG. 12

$+1000 V$

$U_Z = 120 V$     9

10

5   $R_D = 1\Omega$

$I_E (950V)$     950 V

$I = 50 A$

8   7   $R = 1000 \Omega$

$U_Z = 250 V$     $U = 250 V$

1b

$R_A = 19\Omega$

700 V   2a

$R_E = 1000 \Omega$

$I_E = 0,7 A$

# FIG. 13

$(1000 V) Z + 500 V$

$U_Z = 120 V$    9

5   $R_D = 1\Omega$

10

$I_E (475V)$     475 V

$I_Z = 50 A$

8   7   $R = 1000 \Omega$

$U_Z = 250 V$     $U = 225 V$

1b

$R_A = 19\Omega$

225 V   2a

$R_E = 1000 \Omega$

$I_E = 0,225 A$